# EUROPEAN PATENT APPLICATION

(11) **EP 4 769 814 A1**
(43) Date of publication of application: **01.07.2026**
(21) Application number: 25854571.4
(22) Date of filing: 31.07.2025
(51) Int. Cl.: H01M 50/533, H01M 50/54, H01M 50/536, H01M 10/058, B23K 26/21, B23K 20/10, H01M 50/586, H01M 50/593, H01M 50/531

(54) **METHOD FOR MANUFACTURING SECONDARY BATTERY, SECONDARY BATTERY, BATTERY MODULE COMPRISING SAME, BATTERY PACK, AND TRANSPORTATION MEANS**

(30) Priority: 13.08.2024 KR 20240108530; 07.02.2025 KR 20250016240; 30.07.2025 KR 20250103766
(71) Applicant: LG Energy Solution, Ltd., Seoul 07335 (KR)
(72) Inventor: DO, Jin Uk, Daejeon Daejeon 34122 (KR); LEE, Hyun Hee, Daejeon Daejeon 34122 (KR)
(74) Representative: Goddar, Heinz J.
(86) International application number: PCT/KR2025/011412
(87) International publication number: WO 2026/038762

(57) **Abstract**

Disclosed herein are a method of manufacturing a secondary battery, a secondary battery, a battery module including the same, a battery pack, and a vehicle. The secondary battery may include an electrode assembly and a current collector. The electrode assembly may include an electrode portion, and first and second foil tabs formed on the electrode portion. The current collector may include a first current collecting portion welded to the first foil tabs and a second current collecting portion welded to the second foil tabs. The first foil tabs may be bent in one direction toward the first current collecting portion, and the second foil tabs may be bent in a direction opposite to that of the first foil tabs toward the second current collecting portion. The present disclosure may prevent occurrence of unwelded portions in some foil tabs when welding a large number of foil tabs and the current collector.

## Description

### Technical Field

The present disclosure relates to a method of manufacturing a secondary battery, a secondary battery, a battery module including the same, a battery pack, and a vehicle, and more particularly, to a method of manufacturing a secondary battery, a secondary battery, a battery module including the same, a battery pack, and a vehicle, the secondary battery including an electrode assembly and a current collector and being configured such that the current collector includes a connection portion, and a first current collecting portion and a second current collecting portion perpendicularly extending from a first side and a second side of the connection portion, respectively, a plurality of first foil tabs are bent in a direction toward the first current collecting portion, and a plurality of second foil tabs are bent in a direction opposite to that of the first foil tabs toward the second current collecting portion.

### Background Art

Recently, as the demand for portable electronic devices has rapidly increased and the development of electric vehicles, energy storage batteries, robots, satellites, and the like has become more active, intensive research has been conducted on high-performance secondary batteries capable of repeated charging and discharging.

Secondary batteries may be classified, according to the shape of a battery casing, into a can-type secondary battery, in which an electrode assembly is embedded in a metal can, and a pouch-type secondary battery, in which an electrode assembly is embedded in a pouch formed of an aluminum laminate sheet. The can-type secondary battery may also be classified into a cylindrical secondary battery and a prismatic secondary battery according to the shape of the metal can.

In secondary batteries, a foil tab of an electrode assembly and a current collector are coupled to each other by welding. When welding the foil tab and the current collector, the foil tab is bent in a bending direction to increase a contact area between the foil tab and the current collector, and the current collector is seated on an upper portion of the foil tab and then welded thereto.

However, in this case, there is a risk that a separator is damaged during a process of welding the current collector and the foil tab placed under the current collector. In addition, as the capacity of the secondary battery increases, the number of foil tabs that are required to be welded at once increases, and thus, there is a risk that foil tabs spaced far from the current collector may not be properly welded.

Accordingly, there is a need to develop a secondary battery that eliminates the risk of damaging the separator and enables stable welding of a large number of foil tabs to the current collector.

### DISCLOSURE

### Technical Problem

The present disclosure is directed to providing a secondary battery and a method of manufacturing the same, which may prevent an electrode assembly from being affected when foil tabs and a current collector are welded to each other.

The present disclosure is directed to providing a secondary battery and a method of manufacturing the same, in which a large number of foil tabs can be reliably welded to the current collector when the foil tabs and the current collector are welded to each other.

### Technical Solution

A secondary battery according to an aspect of the present disclosure may include an electrode assembly and a current collector. The electrode assembly may include an electrode portion, and a plurality of first foil tabs and a plurality of second foil tabs formed on one end of the electrode portion. The current collector may be disposed on an upper portion of the electrode portion, and include a first current collecting portion, a second current collecting portion, and a connection portion. The first current collecting portion may be welded to the plurality of first foil tabs. The second current collecting portion may be welded to the plurality of second foil tabs. The connection portion may be connected at a lower portion of a first side thereof to the first current collecting portion and at an upper portion of a second side thereof to the second current collecting portion. The first current collecting portion and the second current collecting portion respectively extend perpendicularly from the first side and the second side of the connection portion. The plurality of first foil tabs may be bent in one direction toward the first current collecting portion, and the plurality of second foil tabs may be bent in a direction opposite to that of the first foil tabs toward the second current collecting portion.

According to an aspect of the present disclosure, the plurality of first foil tabs and the plurality of second foil tabs may be respectively welded on the first current collecting portion and the second current collecting portion.

According to an aspect of the present disclosure, the electrode portion may include a plurality of first electrode plates formed with the first foil tabs at a first position, and a plurality of second electrode plates formed with the second foil tabs at a second position. The first electrode plates and the second electrode plates may have the same polarity.

According to an aspect of the present disclosure, the plurality of first foil tabs and the plurality of second foil tabs may be spaced apart from each other in a width direction (y-direction) and a longitudinal direction (x-direction) of the electrode assembly.

According to an aspect of the present disclosure, the plurality of first foil tabs may be pre-welded to one another among the first foil tabs, and the plurality of second foil tabs may be pre-welded to one another among the second foil tabs.

According to an aspect of the present disclosure, an insulator may be disposed under a lower surface of the current collector.

According to an aspect of the present disclosure, the current collector may be disposed, on the one end of the electrode portion, in a region in which the plurality of first foil tabs and the plurality of second foil tabs are not formed.

According to an aspect of the present disclosure, the current collector may be disposed, on the one end of the electrode portion, between the plurality of first foil tabs and the plurality of second foil tabs.

According to an aspect of the present disclosure, the current collecting protrusion may be formed of the same material as the connection portion.

According to an aspect of the present disclosure, the current collecting protrusion may be formed of a material different from that of the connection portion.

According to an aspect of the present disclosure, a thickness of the current collector may range from 0.5 mm to 3.0 mm.

A method of manufacturing a secondary battery according to an aspect of the present disclosure may include a preparation operation of preparing an electrode assembly including an electrode portion, and a plurality of first foil tabs and a plurality of second foil tabs that are formed on one end of the electrode portion, a current collector disposing operation of disposing a current collector on the one end of the electrode portion in a region in which the plurality of first foil tabs and the plurality of second foil tabs are not formed, a bending operation of bending the plurality of first foil tabs in a direction toward an upper surface of a first current collecting portion of the current collector, and bending the plurality of second foil tabs in a direction opposite to the bending direction of the first foil tabs toward an upper surface of a second current collecting portion of the current collector, and a welding operation of welding the plurality of bent first foil tabs and the plurality of bent second foil tabs to the current collector.

According to an aspect of the present disclosure, the method may further include, after the preparation operation, a primary welding operation of primarily welding the plurality of first foil tabs to one another among the first foil tabs, and primarily welding the plurality of second foil tabs to one another among the second foil tabs.

According to an aspect of the present disclosure, the current collector may include a connection portion having a current collecting protrusion. The first current collecting portion may be perpendicularly connected to a lower portion of a first side of the connection portion, and the second current collecting portion may be perpendicularly connected to an upper portion of a second side of the connection portion.

According to an aspect of the present disclosure, in the current collector, the first current collecting portion and the second current collecting portion may be made of the same material as the first foil tabs and the second foil tabs.

According to an aspect of the present disclosure, an insulator may be disposed under a lower surface of the current collector.

According to an aspect of the present disclosure, in the welding operation, in the first current collecting portion, the welding may be performed from the plurality of first foil tabs toward the first current collecting portion, and in the second current collecting portion, the welding may be performed from the plurality of second foil tabs toward the second current collecting portion.

A battery module according to an aspect of the present disclosure may include the secondary battery.

A battery pack according to an aspect of the present disclosure may include the battery module.

A vehicle according to an aspect of the present disclosure may include the battery pack.

### Advantageous Effects

In a secondary battery and a method of manufacturing the secondary battery according to an embodiment of the present disclosure, a separator may be prevented from being damaged when foil tabs and a current collector are welded to each other.

In a secondary battery and a method of manufacturing the secondary battery according to an embodiment of the present disclosure, it is possible to prevent an unwelded portion from occurring in some foil tabs when a large number of foil tabs and the current collector are welded to each other.

### Brief Description of Drawings

FIG. 1 is a view illustrating a secondary battery according to an embodiment of the present disclosure.
FIG. 2 is a view illustrating the secondary battery according to an embodiment of the present disclosure.
FIG. 3 is a view illustrating an electrode assembly in which a plurality of first and second foil tabs are formed on an electrode portion, in the secondary battery according to an embodiment of the present disclosure.
FIGS. 4a and 4b are views illustrating a first electrode plate and a second electrode plate in the secondary battery according to an embodiment of the present disclosure.
FIGS. 5a and 5b are views illustrating a third electrode plate and a fourth electrode plate in the secondary battery according to an embodiment of the present disclosure.
FIG. 6 is a view illustrating a current collector in the secondary battery according to an embodiment of the present disclosure.
FIGS. 7a and 7b are views illustrating the current collector in the secondary battery according to an embodiment of the present disclosure.
FIGS. 8a and 8b are views illustrating the current collector including an insulator in the secondary battery according to an embodiment of the present disclosure.
FIG. 9 is a view illustrating the current collector disposed on one end of an electrode portion in the secondary battery according to an embodiment of the present disclosure.
FIG. 10 is a view illustrating the current collector welded to first and second foil tabs in the secondary battery according to an embodiment of the present disclosure.
FIG. 11 is a sectional view illustrating the current collector and the first foil tabs that are welded to each other in the secondary battery according to an embodiment of the present disclosure.
FIG. 12 is a flowchart showing a method of manufacturing the secondary battery according to an embodiment of the present disclosure.
FIG. 13 is a view illustrating a plurality of first foil tabs and a plurality of second foil tabs that are grouped, respectively, in the secondary battery according to an embodiment of the present disclosure.
FIGS. 14a and 14b are views illustrating the current collector disposed on one end of the electrode portion and welded to the plurality of first foil tabs and the plurality of second foil tabs in the secondary battery according to an embodiment of the present disclosure.
FIGS. 15a, 15b, and 15c are views illustrating the current collector disposed between first and second primarily welded foil tabs and welded to the plurality of first foil tabs and the plurality of second foil tabs in the secondary battery according to an embodiment of the present disclosure.
FIG. 16 is a view illustrating a welding direction during welding of the current collector and the first foil tabs in the secondary battery according to an embodiment of the present disclosure.
FIG. 17 is a view illustrating the current collector welded to the first and second foil tabs in the secondary battery according to an embodiment of the present disclosure.
FIG. 18 is a view illustrating a cover element disposed on a portion where the current collector and the first foil tabs are welded to each other in the secondary battery according to an embodiment of the present disclosure.
FIG. 19 is a view illustrating a cap assembly coupled to the electrode assembly in the secondary battery according to an embodiment of the present disclosure.

### Best Mode

Since the present disclosure may be modified in various forms, and may have various embodiments, particular embodiments will be illustrated in the accompanying drawings and described in detail with reference to the drawings. However, this is not intended to limit the present disclosure to particular modes of practice, and it is to be appreciated that all changes, equivalents, and substitutes that do not depart from the spirit and technical scope of the present disclosure are encompassed in the present disclosure.

The terminology used herein is for the purpose of describing particular embodiments only and is not intended to be limiting the present disclosure. In the present disclosure, the singular forms are intended to include the plural forms as well, unless the context clearly indicates otherwise. It will be further understood that the terms "include", "have", etc. when used in this specification, are intended to specify the presence of stated features, integers, steps, operations, elements, components, and/or combinations of them but do not preclude the presence or addition of one or more other features, integers, steps, operations, elements, components, and/or combinations thereof.

Hereinafter, exemplary embodiments of the present disclosure will be described in detail with reference to the accompanying drawings. It should be noted that like reference numerals refer to like elements throughout the attached drawings. Details of well-known configurations and functions may be omitted to avoid unnecessarily obscuring the gist of the present disclosure. For the same reason, in the accompanying drawings, some elements are enlarged, omitted, or depicted schematically.

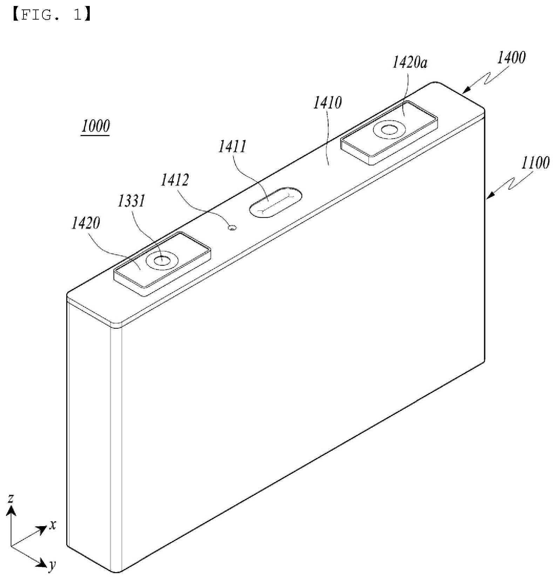

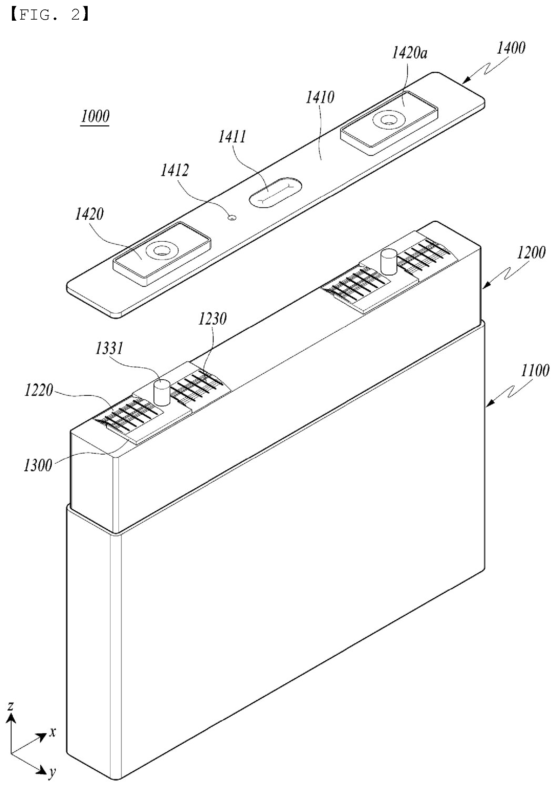

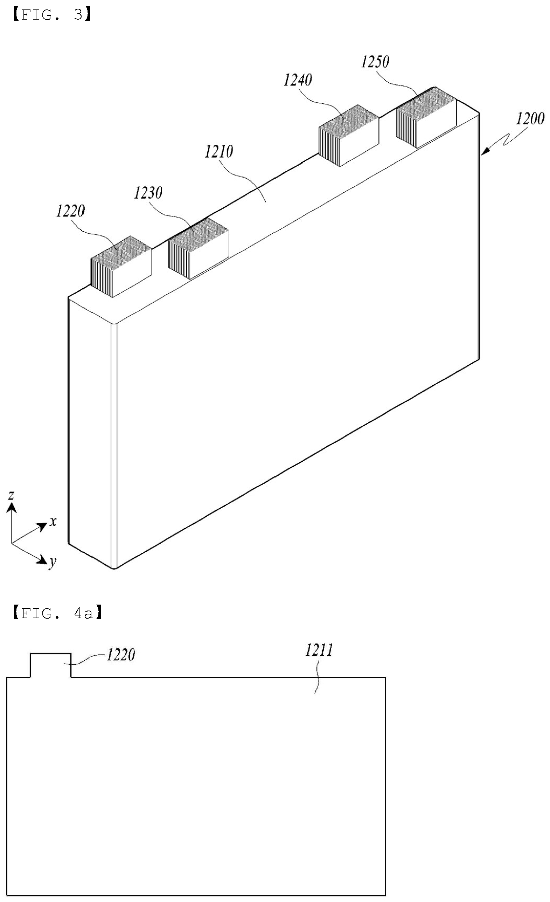

FIG. 1 is a view illustrating a secondary battery according to an embodiment of the present disclosure. FIG. 2 is a view illustrating the secondary battery according to an embodiment of the present disclosure. FIG. 3 is a view illustrating an electrode assembly in which a plurality of first and second foil tabs are formed on an electrode portion, in the secondary battery according to an embodiment of the present disclosure.

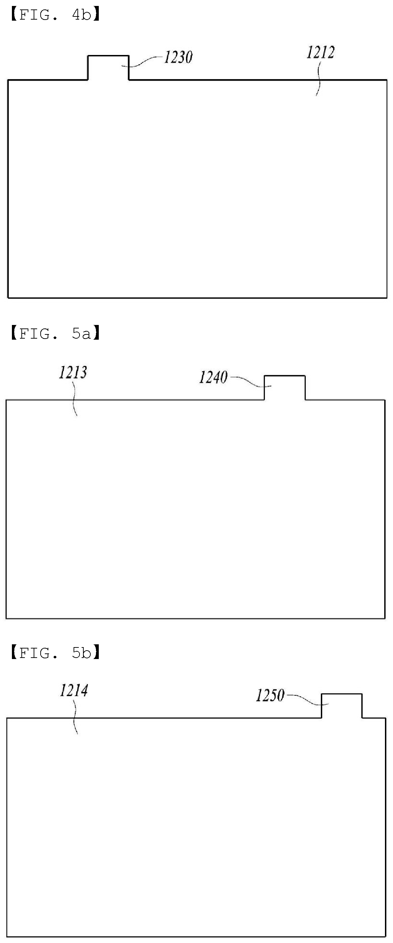

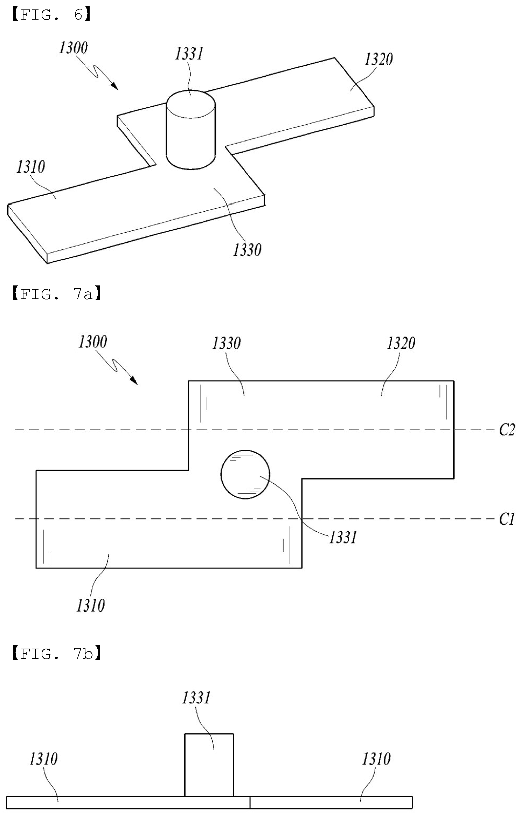

FIGS. 4a and 4b are views illustrating a first electrode plate and a second electrode plate in the secondary battery according to an embodiment of the present disclosure. FIGS. 5a and 5b are views illustrating a third electrode plate and a fourth electrode plate in the secondary battery according to an embodiment of the present disclosure. FIG. 6 is a view illustrating a current collector in the secondary battery according to an embodiment of the present disclosure.

As illustrated in FIGS. 1 and 2, a secondary battery 1000 according to an embodiment of the present disclosure includes a casing 1100, an electrode assembly 1200, a current collector 1300, and a cap assembly 1400.

The casing 1100 forms an outer shape of the secondary battery 100. The casing 1100 may define a space capable of accommodating the electrode assembly 1200 therein, and may have an opening on one surface thereof. In the present embodiment, the casing 1100 has a rectangular parallelepiped shape, but is not limited thereto and may be modified in various ways. The casing 1100 may be made of a rigid material capable of protecting the electrode assembly 1200 accommodated therein. For example, the casing 1100 may be made of metal such as aluminum or stainless steel.

Electrolyte may be received together with the electrode assembly 1200 in the casing 1100. The electrolyte may include a lithium salt such as LiPF6 or LiBF4 in an organic solvent such as ethylene carbonate (EC), propylene carbonate (PC), diethyl carbonate (DEC), ethyl methyl carbonate (EMC), or dimethyl carbonate (DMC). The electrolyte may be in a liquid, solid, or gel phase.

The electrode assembly 1200 is accommodated in the casing 1100. As illustrated in FIG. 3, the electrode assembly 1200 includes an electrode portion 1210, a plurality of first foil tabs 1220, and a plurality of second foil tabs 1230. The plurality of first foil tabs 1220 and the plurality of second foil tabs 1230 are disposed on one end of the electrode portion 1210. The plurality of first foil tabs 1220 are grouped and aligned with one another among the first foil tabs 1220, and the plurality of second foil tabs 1230 are grouped and aligned with one another among the second foil tabs 1230. The plurality of first foil tabs 1220 and the plurality of second foil tabs 1230, which are respectively aligned with one another, are arranged so as not to overlap in a width direction (y-direction) and a longitudinal direction (x-direction) of the electrode assembly 1200.

Specifically, the electrode portion 1210 includes a plurality of first electrode plates 1211, a plurality of second electrode plates 1212, a plurality of third electrode plates 1213, a plurality of fourth electrode plates 1214, and separators.

An active material may be applied to the plurality of first electrode plates 1211, the plurality of second electrode plates 1212, the plurality of third electrode plates 1213, and the plurality of fourth electrode plates 1214. The plurality of first electrode plates 1211 and the plurality of second electrode plates 1212 may each be formed by applying an active material such as a transition metal oxide to a metal plate such as an aluminum plate. The plurality of first electrode plates 1211 and the plurality of second electrode plates 1212 may have the same polarity, and may be positive electrode plates. The plurality of third electrode plates 1213 and the plurality of fourth electrode plates 1214 may each be formed by applying an active material such as graphite or carbon to a metal plate such as a copper or nickel plate. The plurality of third electrode plates 1213 and the plurality of fourth electrode plates 1214 may have the same polarity, and may be negative electrode plates.

The separators are positioned between the plurality of first to fourth electrode plates 1211, 1212, 1213, and 1214 to prevent a short circuit between the plurality of first to fourth electrode plates 1211, 1212, 1213, and 1214. The separators may be made of polyethylene, polypropylene, a composite material thereof, or the like.

The electrode portion 1210 may be formed by positioning separators between the first electrode plates 1211 and the third electrode plates 1213, which are sequentially arranged, and between the second electrode plates 1212 and the fourth electrode plates 1214, which are sequentially arranged. In other words, in an embodiment, the electrode portion 1210 may be formed in such a way that one side of the electrode portion 1210 is formed by stacking the first electrode plate 1211, the separator, the third electrode plate 1213, and the separator in the listed order, tens to hundreds of times, and another side of the electrode portion 1210 is formed by stacking the second electrode plate 1212, the separator, the fourth electrode plate 1214, and the separator in the listed order, tens to hundreds of times. In another embodiment, the electrode portion 1210 may be formed by sequentially stacking the first electrode plate 1211, the separator, the third electrode plate 1213, the separator, the second electrode plate 1212, the separator, the fourth electrode plate 1214, and the separator in the listed order, and then winding the stacked structure.

Although, in the present embodiment, the electrode assembly 1200 is illustrated as including the single electrode portion 1210, in another embodiment, the electrode assembly 1200 may include a plurality of electrode portions 1210. The plurality of electrode portions 1210 may be electrically connected to one another.

The first foil tabs 1220, the second foil tabs 1230, third foil tabs 1240, and fourth foil tabs 1250, to which no active material is applied, are respectively formed at one ends of the plurality of first to fourth electrode plates 1211, 1212, 1213, and 1214. In an embodiment, each of the electrode plates 1211, 1212, 1213, and 1214 and the corresponding foil tab 1220, 1230, 1240, or 1250 may be integrally formed by cutting a predetermined portion of a single metal plate using a laser or the like, such that the electrode plate 1211, 1212, 1213, or 1214 and the foil tab 1220, 1230, 1240, or 1250 remain. The plurality of foil tabs 1220, 1230, 1240, and 1250 may be formed in a direction toward the cap assembly 1400.

Each of the first foil tabs 1220 may be formed on a first position of the corresponding first electrode plate 1211, and each of the second foil tabs 1230 may be formed on a second position of the corresponding second electrode plate 1212 (see FIGS. 4a and 4b). Similarly, each of the third foil tabs 1240 may be formed on a third position of the corresponding third electrode plate 1213, and each of the fourth foil tabs 1250 may be formed on a fourth position of the corresponding fourth electrode plate 1214 (see FIGS. 5a and 5b).

The plurality of first electrode plates 1211 and the plurality of third electrode plates 1213 may be alternately stacked with the corresponding separators interposed between adjacent electrode plates. A stack including the plurality of first electrode plates 1211 and the plurality of third electrode plates 1213 forms one half of the electrode portion 1210.

The plurality of second electrode plates 1212 and the plurality of fourth electrode plates 1214 may be alternately stacked with the corresponding separators interposed between adjacent electrode plates. A stack including the plurality of second electrode plates 1212 and the plurality of fourth electrode plates 1214 forms a remaining half of the electrode portion 1210.

The stack including the plurality of first electrode plates 1211 and the plurality of third electrode plates 1213 and the stack including the plurality of second electrode plates 1212 and the plurality of fourth electrode plates 1214 are connected in a width direction of the electrode portion 1210. During formation of the electrode assembly 1200, the plurality of first electrode plates 1211 and the plurality of third electrode plates 1213 may be stacked before stacking the plurality of second electrode plates 1212 and the plurality of fourth electrode plates 1214.

When the plurality of first to fourth electrode plates 1211, 1212, 1213, and 1214 are stacked, the plurality of first foil tabs 1220 overlap one another at the first position, and the plurality of second foil tabs 1230 overlap one another at the second position. In other words, among the plurality of first foil tabs 1220 and the plurality of second foil tabs 1230 that have the same polarity, the plurality of first foil tabs 1220 are grouped at the first position, and the plurality of second foil tabs 1230 are grouped at the second position. The first position and the second position are spaced apart from each other on the electrode plate. The plurality of first foil tabs 1220 that are grouped and the plurality of second foil tabs 1230 that are grouped may be spaced apart in the width direction (y-direction) and the longitudinal direction (x-direction) of the electrode assembly 1200.

In order to enable reliable welding of a large number of foil tabs, foil tabs of the same polarity are divided into two groups spaced apart from each other, and each group is welded on the current collector. That is, although one foil tab is formed on each electrode plate, two foil tab groups having the same polarity but different positions are formed after stacking of the electrode plates by varying positions at which the foil tabs are formed on the respective electrode plates. In another embodiment, two or more foil tabs may be formed at different positions on the same polarity side.

When the plurality of first to fourth electrode plates 1211, 1212, 1213, and 1214 are stacked, the plurality of third foil tabs 1240 overlap one another at the third position, and the plurality of fourth foil tabs 1250 overlap one another at the fourth position. In other words, the plurality of third foil tabs 1240 are grouped at the third position, and the plurality of fourth foil tabs 1250 are grouped at the fourth position. The third position and the fourth position are spaced apart from each other on the electrode plate. The plurality of third foil tabs 1240 that are grouped and the plurality of fourth foil tabs 1250 that are grouped may be spaced apart in the width direction (y-direction) and the longitudinal direction (x-direction) of the electrode assembly 1200.

The plurality of third foil tabs 1240 and the plurality of fourth foil tabs 1250 may be foil tabs having the same polarity.

The plurality of foil tabs 1220, 1230, 1240, and 1250, which overlap at the respective positions, may each be coupled to the corresponding current collector by ultrasonic welding, laser welding, or the like to facilitate current flow.

As illustrated in FIG. 6, the current collector 1300 may include a first current collecting portion 1310, a second current collecting portion 1320, a connection portion 1330, and a current collecting protrusion 1331.

The first foil tabs 1220 may be welded to the first current collecting portion 1310. The second foil tabs 1230 may be welded to the second current collecting portion 1320.

The structure of the current collector is described later herein.

The cap assembly 1400 seals the opening of the casing 1100 in which the electrode assembly 1200 is accommodated. The cap assembly 1400 includes a cap plate 1410 and terminals 1420 and 1420a.

The cap plate 1410 may have a plate shape that covers the opening of the casing 1100. The cap plate 1410 may have a shape corresponding to that of the opening of the casing 1100. The cap plate 1410 may be formed of the same material as the casing 1100, and may be fixed to the casing 1100 by a method such as laser welding.

The cap plate 1410 may be formed with a vent hole 1411 and an electrolyte injection hole 1412. The vent hole 1411 opens when an internal pressure of the casing 1100 exceeds a reference value. In the present embodiment, the vent hole 1411 is formed in the cap plate 1410, but in other embodiments, the vent hole 1411 may be formed in the casing 1100. Electrolyte can be injected into the casing 1100 through the electrolyte injection hole 1412.

The terminals 1420 and 1420a may be formed to protrude from the cap plate 1410. The terminals 1420 and 1420a are respectively electrically connected to the foil tabs 1220 and 1220a through the current collectors 1300. The terminals 1420 and 1420a may each have a circular or rectangular plate shape.

A through hole may be formed in each of the terminals 1420 and 1420a. Each current collecting protrusion 1331 is inserted into the corresponding through hole. After the current collecting protrusion 1331 is inserted into the through hole, an outer peripheral surface of an end of the current collecting protrusion 1331 and an inner peripheral surface of an end of the through hole may be welded.

Insulators 1430 and 1430a may be respectively positioned between the terminals 1420 and 1420a and the cap plate 1410. The insulators 1430 and 1430a electrically insulate the terminals 1420 and 1420a and the cap plate 1410 from each other.

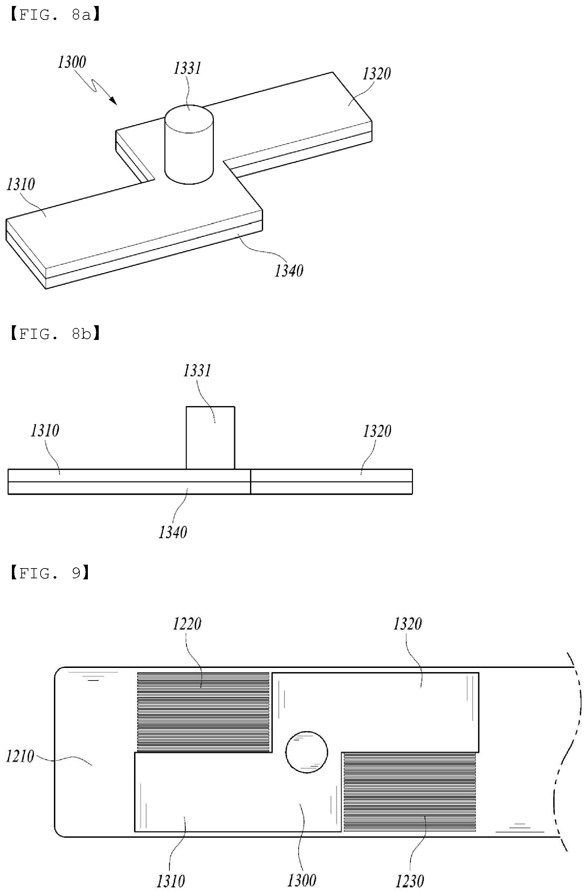

FIGS. 7a and 7b are views illustrating the current collector in the secondary battery according to an embodiment of the present disclosure. FIGS. 8a and 8b are views illustrating the current collector including an insulator in the secondary battery according to an embodiment of the present disclosure.

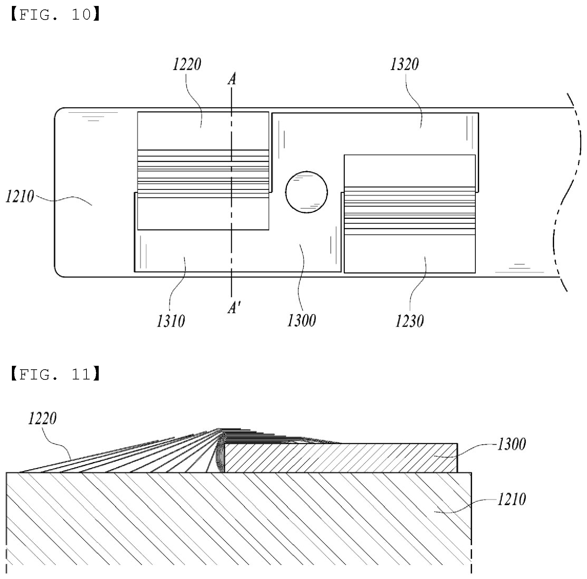

FIG. 9 is a view illustrating the current collector disposed on one end of an electrode portion in the secondary battery according to an embodiment of the present disclosure. FIG. 10 is a view illustrating the current collector welded to the first and second foil tabs in the secondary battery according to an embodiment of the present disclosure. FIG. 11 is a sectional view illustrating the current collector and the first foil tabs that are welded to each other in the secondary battery according to an embodiment of the present disclosure.

As illustrated in FIG. 7a, the current collector 1300 may include the first current collecting portion 1310, the second current collecting portion 1320, and the connection portion 1330.

The current collector 1300 has a "Z" shape. The current collector 1300 is configured such that the first current collecting portion 1310 and the second current collecting portion 1320 are respectively connected to opposite sides of the connection portion 1330 and extend from the connection portion 1330 serving as the center. The first current collecting portion 1310 may be connected in a direction (x-direction) perpendicular to a lower portion of a first side of the connection portion 1330, and the second current collecting portion 1320 may be connected in a direction (x-direction) perpendicular to an upper portion of a second side of the connection portion 1330. The first current collecting portion 1310 and the second current collecting portion 1320 may each be connected at one side thereof to the connection portion 1330 and may extend in opposite directions along a longitudinal direction (x-direction) of the electrode assembly 1200.

In other words, the first current collecting portion 1310 and the second current collecting portion 1320 are disposed to be offset from each other in the longitudinal direction with the connection portion 1330 serving as the center. Due to the offset arrangement of the first current collecting portion 1310 and the second current collecting portion 1320, a shape in which the first current collecting portion 1310, the second current collecting portion 1320, and the connection portion 1330 are connected may be a step shape or a "Z" shape. A longitudinal center line C1 of the first current collecting portion 1310 and a longitudinal center line C2 of the second current collecting portion 1320 may be parallel to each other.

The first current collecting portion 1310, the second current collecting portion 1320, and the connection portion 1330 are integrally formed of the same material, and the first current collecting portion 1310 and the second current collecting portion 1320 are electrically connected.

An insulator 1340 may be disposed under the current collector 1300 (see FIGS. 8a and 8b). The insulator 1340 may be an insulating plate or an insulating film. The insulator 1340 may further protect the foil tabs 1220 and 1230 and the electrode portion 1210.

In the current collector 1300, widths of the first current collecting portion 1310 and the second current collecting portion 1320 may be 0.3 to 0.5 times a width of the electrode assembly 1200.

As illustrated in FIG. 9, the current collector 1300 may be disposed on a portion of one end of the electrode portion 1210 where the plurality of first foil tabs 1220 and the plurality of second foil tabs 1230 are not formed. Because the plurality of first foil tabs 1220 and the plurality of second foil tabs 1230 are spaced apart in a width direction and a longitudinal direction of the electrode assembly 1200, a region in which no foil tab is formed is defined at one side of the plurality of first foil tabs 1220 and the plurality of second foil tabs 1230. The current collector 1300 is disposed such that the first current collecting portion 1310 and the second current collecting portion 1320 are respectively located on the portion where no foil tab is formed.

The first current collecting portion 1310 is welded to the plurality of first foil tabs 1220. The plurality of first foil tabs 1220 may be bent onto and welded to the first current collecting portion 1310. The second current collecting portion 1320 is welded to the plurality of second foil tabs 1230. The plurality of second foil tabs 1230 may be bent onto and welded to the second current collecting portion 1320. That is, the plurality of first foil tabs 1220 and the plurality of second foil tabs 1230 are bent in opposite directions and welded.

The welding is performed on the plurality of first foil tabs 1220 and the plurality of second foil tabs 1230. A method such as ultrasonic welding, laser welding, or the like may be used for the welding. During the welding, in the first current collecting portion 1310 of the current collector 1300, the welding may be performed from the plurality of first foil tabs 1220 toward the first current collecting portion 1310, and in the second current collecting portion 1320 of the current collector 1300, the welding may be performed from the plurality of second foil tabs 1230 toward the second current collecting portion 1320.

As illustrated in FIG. 10, because the first current collecting portion 1310 and the second current collecting portion 1320 are disposed to be offset in the longitudinal direction (x-direction) and the width direction (y-direction) of the electrode assembly 1200 by the connection portion 1330, the plurality of first foil tabs 1220 and the plurality of second foil tabs 1230 do not interfere with each other when welded to the first current collecting portion 1310 and the second current collecting portion 1320, respectively.

Two current collectors 1300 may be provided, and a material of each current collector 1300 may be the same as that of the first and second foil tabs 1220 and 1230 or the third and fourth foil tabs 1240 and 1250. That is, the current collector 1300 may be formed of aluminum, or may be formed of copper or nickel.

The current collecting protrusion 1331 is provided on the connection portion 1330. The current collecting protrusion 1331 is electrically connected to an electrode terminal. A material of the current collecting protrusion 1231 may be the same as or different from that of the connection portion 1330. For example, both the connection portion 1330 and the current collecting protrusion 1231 may be formed of aluminum. Alternatively, the connection portion 1330 may be formed of copper, and the current collecting protrusion 1331 may be formed of aluminum. When the material of the current collecting protrusion 1331 is the same as the material of the connection portion 1330, the connection portion 1330 and the current collecting protrusion 1231 may be integrally formed.

The current collector 1300 may have a thickness ranging from 0.5 mm to 3.0 mm. In the present disclosure, the current collector 1300 is located in a region of an electrode portion where no foil tab is formed, and the foil tabs 1220 and 1230 are bent onto the current collector 1300 before welding is performed from upper sides of the foil tabs 1220 and 1230. Accordingly, the thickness of the current collector 1300 may be increased. As a result, durability of the secondary battery may also be improved.

A plurality of fine grooves or a plurality of fine irregularities may be formed on an upper surface of the current collector 1300. The fine grooves and the fine irregularities may be first melted during welding, thereby enabling the current collector 1300 to be more firmly fused with the foil tabs 1220 and 1230.

In the present disclosure, because the foil tabs are positioned on the current collector 1300 and the welding is performed from the upper side of the foil tabs (see FIG. 11), there is no risk of damaging the separators provided in the electrode portion.

In addition, in the related art, welding is performed after the current collector is disposed on the foil tabs, and thus high laser output is required to transmit heat to the foil tabs located under the current collector. However, in the present disclosure, the foil tabs are disposed on the current collector, enabling welding with relatively low output. In the present disclosure, because it is unnecessary to melt a lower portion of the current collector, the thickness of the current collector may be increased to protect the separators, thereby also improving the durability of the secondary battery.

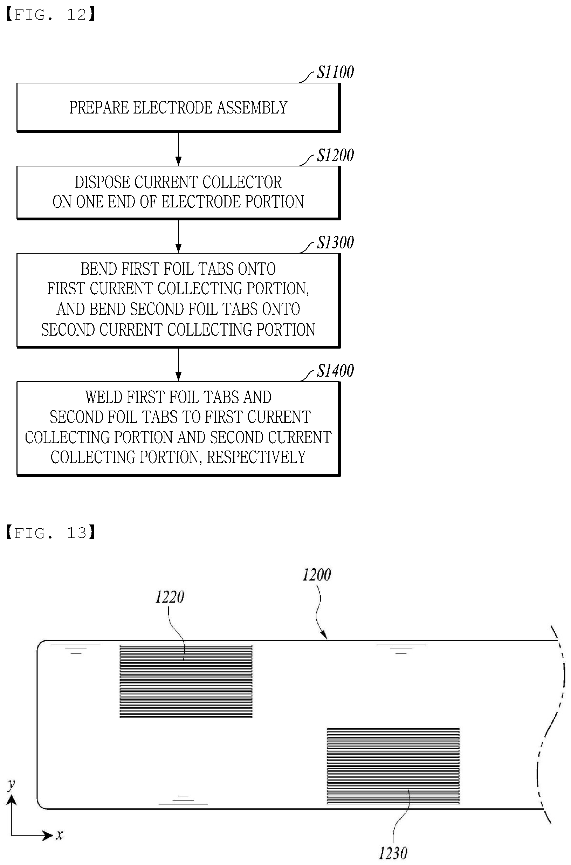

FIG. 12 is a flowchart showing a method of manufacturing the secondary battery according to an embodiment of the present disclosure. FIG. 13 is a view illustrating the plurality of first foil tabs and the plurality of second foil tabs that are grouped, respectively, in the secondary battery according to an embodiment of the present disclosure.

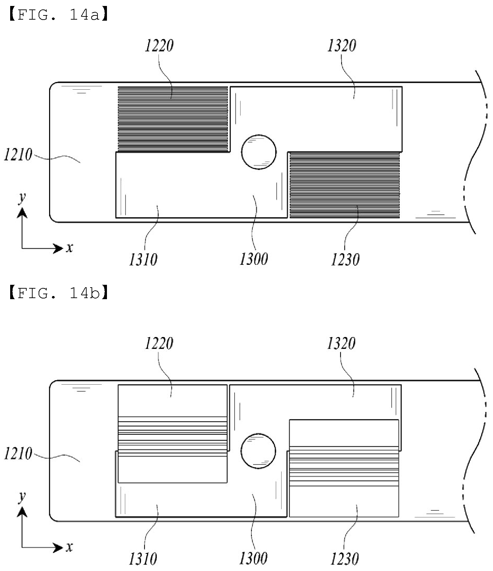

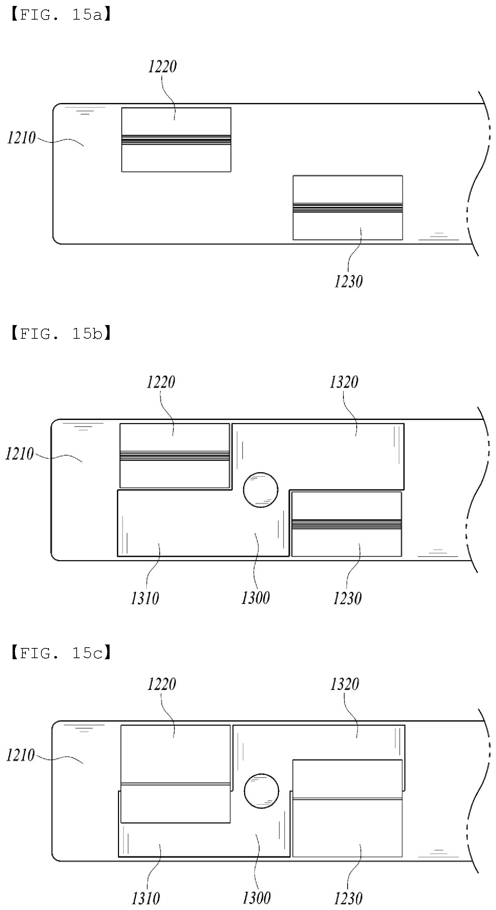

FIGS. 14a and 14b are views illustrating the current collector disposed on one end of the electrode portion and welded to the plurality of first foil tabs and the plurality of second foil tabs in the secondary battery according to an embodiment of the present disclosure. FIGS. 15a, 15b, and 15c are views illustrating the current collector disposed between first and second primarily welded foil tabs and welded to the plurality of first foil tabs and the plurality of second foil tabs in the secondary battery according to an embodiment of the present disclosure.

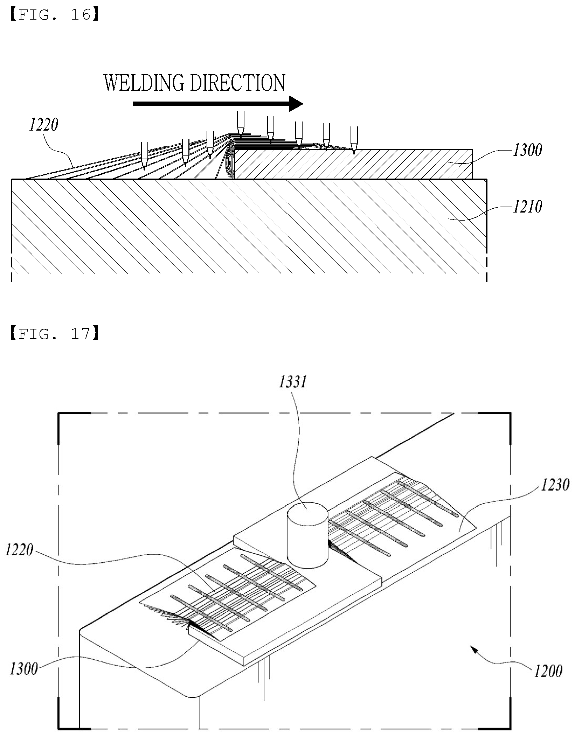

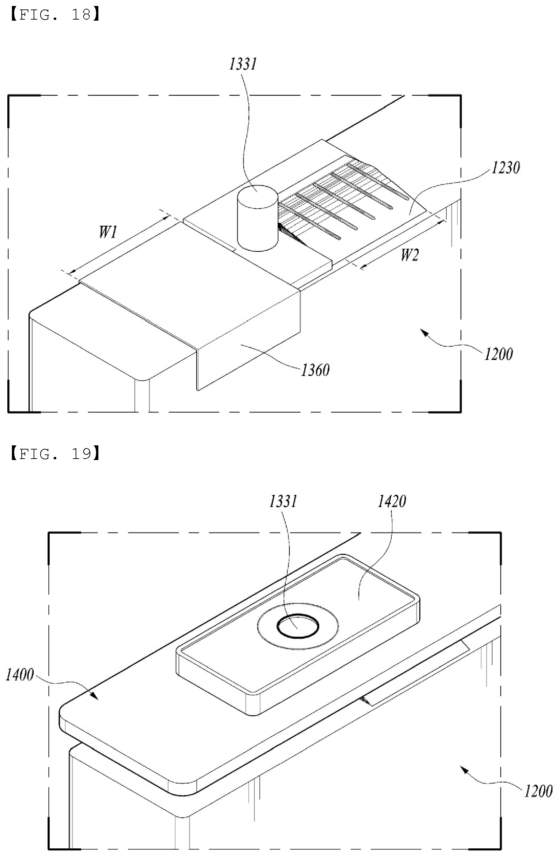

FIG. 16 is a view illustrating a welding direction during welding of the current collector and the first foil tabs in the secondary battery according to an embodiment of the present disclosure. FIG. 17 is a view illustrating the current collector welded to the first and second foil tabs in the secondary battery according to an embodiment of the present disclosure. FIG. 18 is a view illustrating a cover element disposed on a portion where the current collector and the first foil tabs are welded to each other in the secondary battery according to an embodiment of the present disclosure. FIG. 19 is a view illustrating the cap assembly coupled to the electrode assembly in the secondary battery according to an embodiment of the present disclosure.

As illustrated in FIG. 12, to manufacture the secondary battery according to an embodiment of the present disclosure, the electrode assembly 1200 is prepared (S1100). The electrode assembly 1200 includes the electrode portion 1210, and the plurality of first foil tabs 1220 and the plurality of second foil tabs 1230, which are formed on one end of the electrode portion 1210.

The plurality of first foil tabs 1220 and the plurality of second foil tabs 1230 are disposed on the one end of the electrode portion 1210. When a plurality of electrode plates forming the electrode portion 1210 are stacked, the plurality of first foil tabs 1220 overlap one another at the first position, and the plurality of second foil tabs 1230 overlap one another at the second position. In other words, the plurality of first foil tabs 1220 are grouped at the first position, and the plurality of second foil tabs 1230 are grouped at the second position. The first position and the second position are spaced apart from each other on the electrode plates, and the plurality of first foil tabs 1220 that are grouped and the plurality of second foil tabs 1230 that are grouped may be spaced apart in the width direction (y-direction) and the longitudinal direction (x-direction) of the electrode assembly 1200. As illustrated in FIG. 13, the plurality of first foil tabs 1220 that are grouped may be placed on one end in the width direction (y-direction) of the electrode assembly, and the plurality of second foil tabs 1230 that are grouped may be placed on a remaining end in the width direction (y-direction) of the electrode assembly 1200.

Next, the current collector 1300 is disposed on one end of the electrode portion 1210 (S1200). In order to connect the plurality of foil tabs 1220 and 1230 to the current collector 1300, in the present embodiment, the foil tabs 1220 and 1230 having the same polarity are divided into two groups and welded to the current collector 1300. The plurality of first foil tabs 1220 and the plurality of second foil tabs 1230 are respectively grouped at the first position and the second position of the one end of the electrode portion 1210. The plurality of first foil tabs 1220 and the plurality of second foil tabs 1230 grouped respectively are spaced apart in the width direction and the longitudinal direction of the electrode assembly 1200. The current collector 1300 is disposed on the portion of the electrode portion 1210 where the plurality of first foil tabs 1220 and the plurality of second foil tabs 1230 are not formed (see FIG. 14a).

The first foil tabs 1220 and the second foil tabs 1230 are each bent toward the upper surface of the current collector 1300 (S1300). The plurality of first foil tabs 1220 are bent onto an upper surface of the first current collecting portion 1310 of the current collector 1300, and the plurality of second foil tabs 1230 are bent onto an upper surface of the second current collecting portion 1320 of the current collector 1300. The plurality of first foil tabs 1220 and the plurality of second foil tabs 1230 are bent in opposite directions (see FIG. 14b).

The current collector 1300 and the first and second foil tabs 1220 and 1230 placed on the current collector 1300 are welded (S1400). The plurality of first foil tabs 1220 are welded to the first current collecting portion 1310, and the plurality of second foil tabs 1230 are welded to the second current collecting portion 1320. The welding may be performed from the upper sides of the plurality of first foil tabs 1220 and the plurality of second foil tabs 1230. A method such as ultrasonic welding, laser welding, or the like may be used for the welding.

In the present embodiment, although the plurality of foil tabs 1220 and 1230 are bent directly onto the current collector 1300 and welded thereto, in other embodiments, the plurality of foil tabs may be welded in advance such that the first foil tabs 1220 are welded to one another among the first foil tabs 1220 and the second foil tabs 1230 are welded to one another among the second foil tabs 1230, and thereafter welded to the current collector 1300.

As illustrated in FIG. 15a, the first and second foil tabs 1220 and 1230 may be primarily welded to one another in such a way that the first foil tabs 1220 are welded to one another among the first foil tabs 1220 and the second foil tabs 1230 are welded to one another among the second foil tabs 1230, before the current collector 1300 is disposed. The current collector 1300 is then disposed between the primarily welded first foil tabs 1220 and the primarily welded second foil tabs 1230 (see FIG. 15b), and the first foil tabs 1220 and the second foil tabs 1230 may each be bent onto and welded to the current collector 1300 (see FIG. 15c). In this case, after the current collector 1300 is disposed, the first and second foil tabs 1220 and 1230 may be easily bent onto the current collector 1300.

As illustrated in FIG. 16, during the welding, in the first current collecting portion 1310, the welding may be performed from the plurality of first foil tabs 1220 toward the first current collecting portion 1310, and in the second current collecting portion 1320, the welding may be performed from the plurality of second foil tabs 1230 toward the second current collecting portion 1320.

When the welding is completed, the first and second foil tabs 1220 and 1230 are coupled to the current collector 1300 (see FIG. 17). Because the plurality of foil tabs 1220 and 1230 are welded directly onto the current collector 1300, it is unnecessary for lengths of the foil tabs to be long, thereby reducing the production cost, and it is unnecessary to provide a bending space for the plurality of foil tabs 1220 and 1230, thereby further increasing capacity of the secondary battery.

As illustrated in FIG. 18, in an embodiment, after the welding of the plurality of foil tabs 1220 and 1230 is completed, a cover element 1360 may be disposed on each welded portion, that is, on each of the first current collecting portion 1310 and the second current collecting portion 1320. The cover element 1360 may cover at least portions of the electrode assembly 1200 and the current collector 1300.

The cover element 1360 may include an insulating material. The cover element 1360 may be an insulating tape. The current collecting protrusion 1331 may be exposed without being covered by the cover element 1360. Each of the terminals 1420 and 1420a may be coupled to the corresponding current collecting protrusion 2331. Because each welded portion is covered with the cover element 1360, an insulating structure of the cover plate 1400 may be further simplified.

In order for the cover element 1360 to smoothly cover the welded portion, a width w1 of the cover element 1360 in the present embodiment may be 1 to 1.2 times a width w2 of the first and second foil tabs.

The electrode assembly 1200 to which the current collector 1300 is welded is accommodated in the casing 1100. The cap assembly 1400 seals the opening of the casing 1100. As illustrated in FIG. 19, after the current collecting protrusion 1331 is inserted into the through hole of the terminal 1420 of the cap assembly 1400, the outer circumferential surface of the end of the current collecting protrusion 1331 may be welded to the inner circumferential surface of the end of the through hole.

In the case where the current collector is welded to upper portions of the foil tabs, the current collector is required to be relatively thin to transmit heat to the foil tabs located under the current collector, thus leading to deterioration in the durability of the secondary battery. However, in the present disclosure, because the plurality of foil tabs are bent onto and welded to the current collector, a sufficient thickness of the current collector can be secured, and the foil tabs may be more efficiently welded to the current collector.

Furthermore, in the present disclosure, because the plurality of foil tabs having the same polarity are divided into two groups and welded, the foil tabs may be stably welded without any unwelded portions.

In an embodiment, during a welding operation, an output of a welding apparatus may be adjusted depending on the position of each foil tab.

A battery module may be configured by including a plurality of secondary batteries according to an embodiment of the preset disclosure. The plurality of secondary batteries may be connected to each other by a bus bar or the like to configure the battery module. In addition, a battery pack may be configured by including a plurality of battery modules. The battery pack may be configured by disposing the plurality of battery modules in an upper pack housing and a lower pack housing constituting a pack housing. In addition, the battery pack may be provided in a vehicle that transports or moves loads or people, or that moves while performing operations. Such a vehicle may include bicycles, heavy equipment, agricultural and fishery equipment, automobiles, buses, and airplanes. Here, the automobile may be an electric vehicle, a hybrid vehicle, or a plug-in hybrid vehicle. The automobile may include a four-wheel automobile or a two-wheel automobile. The vehicle may operate by receiving power from the battery pack.

While the present disclosure has been described with respect to the specific embodiments, it will be apparent to those skilled in the art that various changes or modifications of the present disclosure are possible by adding, changing, or deleting components without departing from the spirit of the present disclosure as defined in the following claims. It should be noted that these changes or modifications also fall within the scope of the present disclosure.

## Claims

1. A secondary battery, comprising:
an electrode assembly including an electrode portion, and a plurality of first foil tabs and a plurality of second foil tabs formed on one end of the electrode portion; and
a current collector disposed on an upper portion of the electrode portion, and including a first current collecting portion welded to the plurality of first foil tabs, a second current collecting portion welded to the plurality of second foil tabs, and a connection portion connected at a lower portion of a first side thereof to the first current collecting portion and at an upper portion of a second side thereof to the second current collecting portion, the connection portion having a current collecting protrusion,
wherein the first current collecting portion and the second current collecting portion respectively extend perpendicularly from the first side and the second side of the connection portion, and
wherein the plurality of first foil tabs are bent in one direction toward the first current collecting portion, and the plurality of second foil tabs are bent in a direction opposite to the bending direction of the first foil tabs toward the second current collecting portion.

2. The secondary battery of claim 1, wherein the plurality of first foil tabs and the plurality of second foil tabs are respectively welded on the first current collecting portion and the second current collecting portion.

3. The secondary battery of claim 1, wherein the electrode portion comprises a plurality of first electrode plates formed with the first foil tabs at a first position, and a plurality of second electrode plates formed with the second foil tabs at a second position, and
wherein the first electrode plates and the second electrode plates have a same polarity.

4. The secondary battery of claim 1, wherein the plurality of first foil tabs and the plurality of second foil tabs are spaced apart from each other in a width direction (y-direction) and a longitudinal direction (x-direction) of the electrode assembly.

5. The secondary battery of claim 1, wherein the plurality of first foil tabs are pre-welded to one another among the first foil tabs, and the plurality of second foil tabs are pre-welded to one another among the second foil tabs.

6. The secondary battery of claim 1, wherein an insulator is disposed under a lower surface of the current collector.

7. The secondary battery of claim 1, wherein the current collector is disposed, on the one end of the electrode portion, in a region in which the plurality of first foil tabs and the plurality of second foil tabs are not formed.

8. The secondary battery of claim 1, wherein the current collector is disposed, on the one end of the electrode portion, between the plurality of first foil tabs and the plurality of second foil tabs.

9. The secondary battery of claim 1, wherein the current collecting protrusion is formed of a same material as the connection portion.

10. The secondary battery of claim 1, wherein the current collecting protrusion is formed of a material different from a material of the connection portion.

11. The secondary battery of claim 1, wherein a thickness of the current collector ranges from 0.5 mm to 3.0 mm.

12. A method of manufacturing a secondary battery, comprising:
a preparation operation of preparing an electrode assembly including an electrode portion, and a plurality of first foil tabs and a plurality of second foil tabs that are formed on one end of the electrode portion;
a current collector disposing operation of disposing a current collector on the one end of the electrode portion in a region in which the plurality of first foil tabs and the plurality of second foil tabs are not formed;
a bending operation of bending the plurality of first foil tabs in a direction toward an upper surface of a first current collecting portion of the current collector, and bending the plurality of second foil tabs in a direction opposite to the bending direction of the first foil tabs toward an upper surface of a second current collecting portion of the current collector; and
a welding operation of welding the plurality of bent first foil tabs and the plurality of bent second foil tabs to the current collector.

13. The method of claim 12, further comprising, after the preparation operation,
a primary welding operation of primarily welding the plurality of first foil tabs to one another among the first foil tabs, and primarily welding the plurality of second foil tabs to one another among the second foil tabs.

14. The method of claim 12,
wherein the current collector comprises a connection portion having a current collecting protrusion,
wherein the first current collecting portion is perpendicularly connected to a lower portion of a first side of the connection portion, and the second current collecting portion is perpendicularly connected to an upper portion of a second side of the connection portion.

15. The method of claim 12, wherein in the current collector, the first current collecting portion and the second current collecting portion are made of a same material as the first foil tabs and the second foil tabs.

16. The method of claim 12, wherein an insulator is disposed under a lower surface of the current collector.

17. The method of claim 12, wherein in the welding operation, in the first current collecting portion, the welding is performed from the plurality of first foil tabs toward the first current collecting portion, and in the second current collecting portion, the welding is performed from the plurality of second foil tabs toward the second current collecting portion.

18. A battery module comprising the secondary battery according to any one of claims 1 to 11.

19. A battery pack comprising the battery module according to claim 18.

20. A vehicle comprising the battery pack according to claim 19.
